(19) **Europäisches Patentamt**

**European Patent Office**

**Office européen des brevets**

(11) **EP 1 693 910 A1**

(12) **EUROPEAN PATENT APPLICATION**
published in accordance with Art. 158(3) EPC

(43) Date of publication:
**23.08.2006 Bulletin 2006/34**

(51) Int Cl.:
*H01M 4/02* (2006.01)    *H01M 4/24* (2006.01)
*H01M 4/04* (2006.01)    *H01M 4/64* (2006.01)

(21) Application number: **04819770.1**

(22) Date of filing: **22.11.2004**

(86) International application number:
**PCT/JP2004/017352**

(87) International publication number:
**WO 2005/055345 (16.06.2005 Gazette 2005/24)**

(84) Designated Contracting States:
**AT BE BG CH CY CZ DE DK EE ES FI FR GB GR HU IE IS IT LI LU MC NL PL PT RO SE SI SK TR**

(30) Priority: **04.12.2003 JP 2003406484
16.09.2004 JP 2004270494
27.10.2004 JP 2004313054**

(71) Applicant: **MITSUI MINING & SMELTING CO., LTD.
Tokyo 141-8584 (JP)**

(72) Inventors:
• **YASUDA, Kiyotaka,
Mitsui Mining&Smelting Co.,Ltd.
Ageo-shi,
Saitama 362-0021 (JP)**

• **MUKAI, Daisuke,
Mitsui Mining & Smelting Co., Ltd
Ageo-shi,
Saitama 362-0021 (JP)**

• **MATSUSHIMA, T.,
Mitsui Mining & SmeltingCo., Ltd.
Ageo-shi,
Saitama 362-0021 (JP)**

• **TAGUCHI, Takeo,
Mitsui Mining & Smelting Co., Ltd
Ageo-shi,
Saitama 362-0021 (JP)**

(74) Representative: **Forstmeyer, Dietmar et al
BOETERS & LIECK
Oberanger 32
80331 München (DE)**

(54) **SECONDARY BATTERY-USE ELECTRODE AND PRODUCTION METHOD THEREFOR AND SECONDARY BATTERY**

(57)    The invention provides an electrode as a cathode or an anode of a secondary battery. The electrode has a first and a second surface that are electrically conductive and adapted to be brought into contact with an electrolytic solution. The electrode has an active material layer containing active material particles between the first and second surfaces. The electrode has a large number of microvoids open on the first and second surfaces and leading to the active material layer.

Fig. 1

**Description**

Technical Field:

This invention relates to an electrode for a secondary battery, more particularly to an electrode providing a battery having a high current collecting efficiency, a high output, and a high energy density and an electrode providing a secondary battery having an extended cycle life as a result of preventing the active material from falling off. The present invention also relates to a process of producing the electrode and a secondary battery having the electrode.

Background Art:

Electrodes that have been used in secondary batteries include those prepared by applying an active material paste containing particles of a hydrogen storage alloy, etc. to one or both sides of a current collector, such as a metal foil (hereinafter referred to as collector type electrodes). Also known are electrodes obtained by filling the pores of a metal foam with active material particles under pressure, followed by vacuum hot-pressing or sintering (see Patent Document 1) and those obtained by filling the pores of a metal foam with active material particles and plating the metal foam with a nickel-chromium alloy or a nickel-zinc alloy (see Patent Document 2 and Patent Document 3) (hereinafter inclusively referred to as foam type electrodes).

A collector type electrode is expected to provide a high output. However, since the current collector used is as relatively thick as 10 to 100 $\mu$m, the proportion of the active material in the electrode is of necessity relatively small, which has made it difficult to increase the energy density. Reducing the active material particle size to increase its specific surface area thereby to increase the output can invite another problem that such active material particles are susceptible to oxidation or corrosion. Moreover, a collector type electrode tends to suffer from fall-off of the active material through expansion and contraction accompanying electrode reaction. It has therefore been not easy to obtain an extended cycle life. On the other hand, a foam type electrode is expected to have a high energy density but difficult to design to produce a high output. A foam type electrode is as thick as about 1 mm, which is disadvantageous for making a flexible or compact electrode. Besides, it is not easy to secure sufficient contact between the active material particles and the current collector. That is, there tends to be electrically isolated active material particles, which has been a bar to obtain increased electron conductivity.

It is proposed that a negative electrode (anode) for lithium secondary batteries which comprises, as constituent components, a metal element that forms an alloy with lithium and a metal element that does not form an alloy with lithium, in which the content of the metal element that does not form an alloy with lithium is higher in the surface portion that is to come into contact with an electrolytic solution and face the positive electrode (cathode) and in the portion that leads to an output terminal (see Patent Document 4). The publication alleges that conductivity is maintained via the metal that does not form a lithium alloy even though the metal that forms a lithium alloy develops cracking and crumbling due to repetition of charging and discharging.

The embodiments suggested in Patent Document 4 include a structure composed of a current collecting portion made of the metal that does not form a lithium alloy and a portion made of powder containing the metal that forms a lithium alloy. The latter portion (powder) being adhered to the former portion by means of a binder. The structure may be baked. A metal element that does not form a lithium alloy can be disposed on the layer containing the metal that forms a lithium alloy. The layer of the metal element that does not form a lithium alloy is formed by, for example, plating.

However, the anode of Patent Document 4 undergoes noticeable deformation as a result of a failure to sufficiently accommodate volume changes due to expansion and contraction of the active material while charging and discharging. When the active material cracks and crumbles through expansion and contraction, the anode is incapable of effectively preventing the active material from falling off. Therefore, it is still difficult with this technique to provide an anode having improved cycle characteristics.

[Patent Document 1] JP-A-62-20244

[Patent Document 2] JP-A-6-140034

[Patent Document 3] JP-A-6-231760

[Patent Document 4] JP-A-8-50922

Summary of the Invention

An object of the present invention is to provide an electrode for secondary batteries free from the problems associated with the related art, a process of producing the electrode, and a secondary battery having the electrode.

The object of the invention is accomplished by providing an electrode for secondary batteries which has a first surface and a second surface both showing electrical conductivity and adapted to be brought into contact with an electrolytic solution and has an active material layer containing active material particles between the first and the second surfaces. The electrode has no thick conductor for current collection.

The present invention also provides a process of producing an electrode for secondary batteries comprising the steps of applying an electrically conductive slurry containing active material particles to a release layer of a carrier foil to form an active material layer, plating the active material layer with a metal by electrodeposition in a plating bath containing the metal to form an electrode having the active material layer, and stripping the electrode off the carrier foil at the release layer.

The invention also provides an electrode for secondary batteries which has a first surface and a second surface both showing electrical conductivity and adapted to be brought into contact with an electrolytic solution and comprises an active material layer containing active material particles between the first and second surfaces and an electrically conductive foil in the middle of the thickness direction thereof. The active material layer is present on both sides of the conductive foil.

The invention also provides a secondary battery having the above-described electrode as a cathode or an anode.

Brief Description of the Drawings:

Fig. 1 is a partial, schematic enlarged cross-section of an electrode according to the present invention.

Fig. 2(a), Fig. 2(b), Fig. 2(c), and Fig. 2(d) show steps included in a process for producing the electrode of Fig. 1.

Fig. 3(a), Fig. 3(b), Fig. 3(c), Fig. 3(d), and Fig. 3(f) illustrate steps included in another process for producing the electrode of Fig. 1.

Fig. 4 schematically illustrates a surface layer with microvoids being formed.

Fig. 5 is a schematic enlarged cross-section of another electrode according to the present invention.

Fig. 6 is a schematic enlarged cross-section of a modification of the electrode shown in Fig. 5.

Fig. 7(a), Fig. 7(b), and Fig. 7(c) show steps included in a process of producing the electrode of Fig. 6.

Fig. 8 is an electron micrograph taken of a cut area of the anode obtained in Example 2.

Fig. 9 is an electron micrograph taken of the surface (current collecting surface layer) of the anode obtained in Example 2 that had been in contact with a carrier foil.

Fig. 10 is an electron micrograph of a cut area of the anode obtained in Example 3.

Fig. 11 is an electron micrograph of a cut area of the anode obtained in Example 4.

Detailed Description of the Invention:

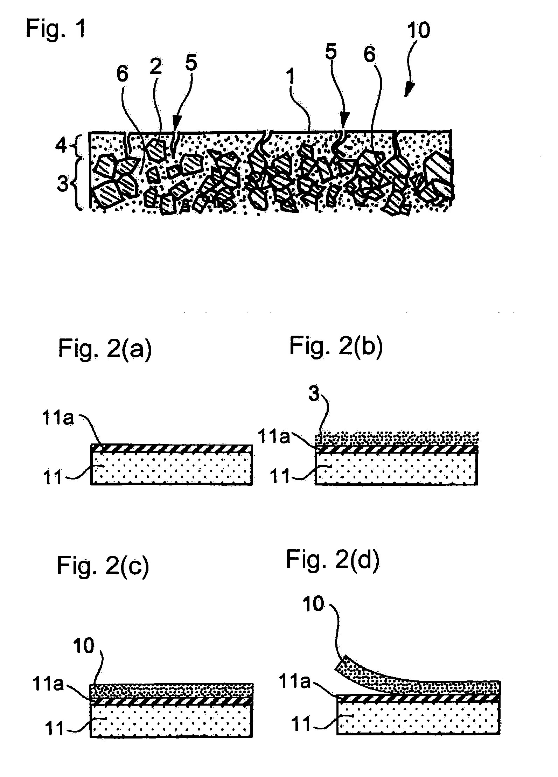

The electrode of the present invention will be described based on its preferred embodiments with reference to the accompanying drawings. In Fig. 1 is shown an enlarged partial, schematic cross-section of an electrode 10 according to a first embodiment of the present invention. While only one side of the electrode is illustrated, the other side has almost the same structure as shown in Fig. 1.

The electrode 10 of the first embodiment has a first surface 1 (shown) and a second surface (not shown) both adapted to be brought into contact with an electrolytic solution. The electrode 10 has an active material layer 3 containing active material particles 2 between the two surfaces. Each side of the active material layer 3 is continuously covered with a current collecting surface layer 4 (only one of the surface layers 4 shown). The surface layers 4 on both sides are inclusive of the first surface 1 and the second surface, respectively. As is understood from Fig. 1, the electrode 10 does not have a thick conductor for current collection, which is called a current collector, such as metal foil or expanded metal.

The current collecting surface layers 4 perform the current collecting function in the electrode 10. The surface layers 4 also serve to prevent the active material of the active material layer 3 from falling off due to expansion and contraction accompanying charging and discharging. Each surface layer 4 is made of a metal that functions as a current collector of second batteries and has no or little reactivity in charging and discharging. A proper metal is chosen according to the type of the battery and the kind of the active material. Such a choice is within the common knowledge to those skilled in the art and nothing worth going into detail about. Examples of useful metals are Cu, Ni, Fe, Co, and their alloys. Cr may be added to improve anticorrosion. The two surface layers may be the same or different in material.

Where the electrode 10 is an anode for nonaqueous secondary batteries, such as lithium ion secondary batteries, the surface layers are preferably made of an element having low capability of forming a lithium compound. Such elements are exemplified by the above-recited ones. Among them Cu, Ni, and their alloys are suitable. An Ni-W alloy is particularly preferred for providing high-strength surface layers 4. The expression "low capability of forming a lithium compound" as used herein means no capability of forming an intermetallic compound or a solid solution with lithium or, if any, the capability is such that the resulting lithium compound contains only a trace amount of lithium or is very labile.

Each of the surface layers 4 is preferably thinner than a thick conductor used as a current collector in conventional electrodes as long as a minimal thickness required for substantially continuously covering the active material layer 3 and thereby preventing the active material particles 2 from falling off is secured. Specifically, the thickness of the surface layer 4 is preferably as small as about 0.3 to 20 $\mu$m, still preferably about 0.3 to 10 $\mu$m, particularly preferably about 0.5 to 5 $\mu$m. With this thinness of the surface layers 4 and without a thick conductor for current collection, the electrode has a relatively increased proportion of the active material and thereby exhibits an increased energy density per unit volume and unit weight. Conventional electrodes have a limit in increasing energy density because of the relatively large proportion of its thick, current-collecting conductor. The surface layers 4 having a thickness within the recited range are preferably formed by electroplating. The two surface layers 4 may be the same or different in thickness.

As mentioned, the two surface layers 4 are inclusive of the first surface 1 and the second surface, respectively. The first surface 1 and the second surface are to be in contact with an electrolytic solution when the electrode 10 is assembled into a battery. On the other hand, a thick, current-collecting conductor used in a conventional electrode has no surface in contact with an electrolytic solution where it has an active material layer on its both sides or only one surface in contact with an electrolytic solution where it has an active material layer on one side thereof. In other words, in the absence of a thick, current-collecting conductor, the surface layers 4, i.e., the outermost layers of the electrode 10 participate in the passage of an electrolytic solution and also bears the current collecting function combined with a function for preventing fall-off of the active material.

Since the surface layers 4 having the first surface 1 and the second surface, respectively, both have a current collecting function, there is an advantage that a battery can be designed to have a lead wire connected to whichever surface layer 4 is appropriate.

As illustrated in Fig. 1, the electrode 10 has a large number of microvoids 5 open on at least one of the first surface 1 and the second surface and leading to the active material layer 3. The microvoids 5 are formed in at least one of the current-collecting surface layers 4, extending in the thickness direction of the surface layer 4. The microvoids 5 allow an electrolytic solution to sufficiently pass the active material layer 3 and to sufficiently react with the active material particles 2. In a cross-section of the surface layer 4, the microvoids 5 have a width of about 0.1 to 100 $\mu$m. To secure prevention of fall-off of the active material, the width of the microvoids 5 is preferably about 0.1 to 10 $\mu$m. The microvoids 5 are so fine and yet wide enough to allow penetration of an electrolytic solution. In particular, a nonaqueous electrolytic solution, which has a smaller surface tension than an aqueous one, is capable of penetrating through the microvoids 5 with a small width. Such microvoids 5 are preferably formed simultaneously with formation of the surface layer 4 by electroplating.

The microvoids 5 open on the first surface 1 and/or the second surface preferably have an average open area of about 0.1 to 100 $\mu$m$^2$, still preferably about 1 to 10 $\mu$m$^2$, when seen from above under an electron microscope. The average open area in that range assures sufficient penetration of an electrolytic solution while effectively preventing the active material particles 2 from falling off. That range also increases the charge/discharge capacity from the initial stage of charge/discharge cycling. To ensure prevention of fall-off of the active material particles 2, it is preferred that the average open area be 5 to 70%, particularly 10 to 40%, of the maximum cross-sectional area of the active material particles 2.

The ratio of the total open area of the microvoids 5 on the first surface 1 or the second surface to the microscope field area, called an open area ratio, is preferably 2 to 20%, still preferably 5 to 10%, for the same reasons as for the average open area of the microvoids 5. For the same reasons, when the first surface 1 or the second surface having microvoids 5 whose average open area falls within the recited preferred range is observed from above under an electron microscope, it is preferred for the surface to have 1 to 20,000, still preferably 100 to 2,000, microvoids 5 within every 1 cm square field. This number of microvoids 5 is referred to as a microvoid distribution.

Because the reaction of the electrode 10 occurs predominantly in the side facing the counter electrode, the microvoids 5 do not need to be present in both surface layers 4. Nevertheless, practical batteries often have a separator and a counter electrode on both sides of a working electrode. In such a battery configuration, it is desirable that both surface layers 4 have the microvoids 5. When the electrode 10 having the microvoids 5 in only one side thereof is applied to such a battery configuration, a set of two electrodes 10 joined with their void-free surface layers facing to each other is used to obtain the same effect as with the electrode 10 having the microvoids 5 on both sides thereof.

The active material layer 3 positioned between the first surface 1 and the second surface contains active material particles 2. The active material that can be used in the present embodiment broadly includes those usable in cathodes and anodes of secondary batteries. Specific examples of useful active materials will be given later. Sandwiched in between a pair of the surface layers 4, the active material particles 2 are effectively protected from falling off the active material layer 3 due to expansion and contraction associated with charge/discharge cycles. Kept in contact with an electrolytic solution through the microvoids 5, the active material particles 2 are not hindered from reacting with the electrolytic solution.

The maximum particle size of the active material particles 2 is preferably not greater than 100 $\mu$m, still preferably 70 $\mu$m or smaller. The median particle size ($D_{50}$) of the active material particles 2 is preferably 1 to 50 $\mu$m, still preferably 1 to 20 $\mu$m. Particles 2 whose maximum size exceeds 100 $\mu$m are apt to fall off to shorten the electrode life. While smaller particles are better, a practical lower limit of the particle size would be about 0.01 $\mu$m. In the present invention, no matter how small the active material particles 2 may be, they hardly undergo oxidation or corrosion. Therefore, even a hydrogen storage alloy, which is susceptible to oxidation, etc., is used as an active material, it is permitted to reduce the active material particle size thereby to obtain an increased output. More concretely, the present invention makes it feasible to use a hydrogen storage alloy with its particle size reduced to as small as about 5 $\mu$m whereas the hydrogen storage alloy used in conventional electrodes had to have a particle size of about 20 $\mu$m. The particle size of the particles 2 can be measured by the laser diffraction-scattering method or electron microscopic observation.

Too small a proportion of an active material in an electrode results in insufficient energy density, and too large the proportion tends to cause fall-off of the active material. With these tendencies taken into consideration, the proportion of the active material in the electrode is preferably 10 to 90%, still preferably 20 to 80%, particularly preferably 40 to 80%, by weight.

The thickness of the active material layer 3 is subject to adjustment in accordance with the proportion of the active material in the electrode and the particle size of the active material. In the first embodiment, the thickness is, but not limited to, about 1 to 200 $\mu$m, preferably 10 to 100 $\mu$m. The active material layer 3 is preferably formed by applying an electrically conductive slurry containing the active material particles 2 as described infra.

Taking the electrode's strength and energy density into consideration, the total thickness of the electrode inclusive of the surface layers 4 and the active material layer 3 is preferably about 1 to 500 $\mu$m, still preferably about 1 to 250 $\mu$m, particularly preferably about 10 to 150 $\mu$m.

The interstitial spaces between the active material particles 2 in the active material layer 3 are preferably penetrated with an electrically conductive material. The conductive material preferably fills in the whole thickness direction of the active material layer 3 so that the active material particles exist in the conductive material. That is, it is preferred that the active material particles 2 be not practically exposed on the surfaces of the electrode 10 but buried in the surface layers 4. Thus, the active material layer 3 exhibits firmer adhesion to the surface layer 4, and the active material is more effectively prevented from coming off. Electron conductivity between the surface layer 4 and the active material is secured by the conductive material penetrating the particle-to-particle spaces of the active material layer 3. Generation of electrically isolated active material particles even in the deep portion of the active material layer 3 are thus prevented effectively. As a result, the current collecting function is retained, reduction in electrode function is suppressed, and the electrode life is prolonged. These effects are advantageous especially in using a semiconductive, poorly electron-conductive material, such as a silicone material, as an active material. As is easily understandable from the foregoing, the electrode according to the first embodiment utterly differs in structure from conventional foam type electrodes obtained by electroplating both sides of a metal foam having active material particles supported therein, such as those disclosed in Patent Document 2 and Patent Document 3 supra.

The conductive material filled in the active material layer 3 can be selected from those useful to make up the surface layers 4. Metallic materials are preferred. The conductive material may be the same or different from that of the surface layers 4. That is, (a) all the materials constituting the two surface layers 4 and the conductive material of the active material layer 3 may be the same or (b) the material of at least one of the surface layers 4 may be different from the conductive material of the active material layer 3. In case (a), the hereinafter described process for fabricating the electrode 10 is carried out through simpler procedures. Further (c)The material of each surface layer may be different from the conductive material filled in the active material layer.

In case (b), the surface layers 4 may be the same or different in material. That is, (b-1) the two surface layers 4 may be of the same material that is different from the conductive material filled in the active material layer 3 or (b-2) all the materials making up the surface layers 2 and the conductive material filled in the active material layer 3 may be different from each other. Where the electrode of the first embodiment is an anode for nonaqueous secondary batteries such as a lithium ion secondary battery, the conductive material filled the active material layer 3 is preferably a material having low capability of forming a lithium compound, still preferably a metallic material, such as Cu, Ni, Fe, Co or an alloy thereof.

It is preferred that the conductive material fills in the entire thickness direction of the active material layer 3 and connects to both of the surface layers 4, whereby the two surface layers 4 are electrically connected via the conductive material to provide the electrode with increased electron conductivity. In this case, the whole electrode 10 serves a current collecting function. The fact that a material constituting the current-collecting surface layers 4 penetrates the entire thickness direction of the active material layer to connect the two surface layers can be confirmed by electron microscope mapping of distribution of the material. A preferred method of penetrating the conductive material into the active material layer will be described later.

It is preferred that the conductive material filled in the active material layer 3 not completely fill the interstitial spaces between the active material particles 2 but leave vacant spaces 6. It should be noted that the vacant spaces 6 differ from the microvoids 5 formed in the current-collecting surface layer 4. The vacant spaces 6 serve to relax the stress caused by expansion and contraction of the active material accompanying charging and discharging. In this connection, the proportion of the vacant spaces 6 in the active material layer 3 is preferably about 1 to 30% by volume, still preferably about 3 to 9% by volume. The proportion of the vacant spaces 6 can be determined by electron microscope mapping. When the active material layer 3 is formed by applying an electrically conductive slurry containing the active material particles 2, followed by drying as described infra, vacant spaces 6 are necessarily formed in the active material layer 3. Accordingly, the volume proportion of the vacant spaces 6 can be controlled within the recited range by properly selecting the particle size of the active material particles 2, the composition of the conductive slurry, and the conditions of application. The volume proportion of the vacant spaces 6 may also be adjusted by pressing the dried active material layer 3 under proper conditions.

The active material to be used varies depending on whether the electrode 10 is used as a cathode or an anode. For application as a cathode, the active material includes nickel hydroxide and cobalt hydroxide. For application as an anode, useful active materials include various hydrogen storage alloys, cadmium, and cadmium oxide. For application as an anode of nonaqueous secondary batteries such as lithium ion secondary batteries, elements having high capability of forming a lithium compound can be used. Such elements include silicon, tin, aluminum, and germanium.

As repeatedly emphasized, the structure of the electrode 10 successfully prevents the active material from falling off due to expansion and contraction with a charge and a discharge. In view of this effect, the electrode 10 is suitable for application to secondary batteries repeatedly subjected to charge and discharge cycles, particularly nickel-hydrogen (NiMH) secondary batteries in which the active material undergoes noticeable expansion and contraction. The electrode 10 is especially suited as an anode of nickel-hydrogen secondary batteries because the active material of the anode is a hydrogen storage alloy that undergoes large expansion and contraction as a result of hydrogen absorption and desorption. The anode of nickel-hydrogen secondary batteries using a hydrogen storage alloy as an active material provides high power output and exhibits superior durability and high reliability, and nickel-hydrogen secondary batteries are therefore suitably used in hybrid electric vehicles (HEVs) and power tools.

Any known hydrogen storage alloys that have been used as an anode active material in nickel-hydrogen secondary batteries can be used in the present invention. Useful hydrogen storage alloys include $AB_5$ alloys having a $CaCu_5$ type crystal structure and Laves phase $AB_2$ alloys typified by $ZrV_{0.4}Ni_{1.5}$. AB alloys and $A_2B$ alloys, e.g., $Mg_2Ni$, are also useful. Examples are $LaNi_5$, $MmNi_5$ (where Mm represents mish metal), and multicomponent alloys having the structure of $MmNi_5$ with part of Ni replaced with at least Al, Co, and Mn and optionally other element(s) selected from Ti, Cu, Zn, Zr, Cr, and B. Inter alia, low-Co hydrogen storage alloys represented by formula: $MmNi_aMn_bAl_cCo_d$ (where Mm is mish metal; $4.0 \leq a \leq 4.7$; $0.3 \leq b \leq 0.65$; $0.2 \leq c \leq 0.5$; $0 < d \leq 0.35$; $5.2 \leq a+b+c+d \leq 5.5$) are preferred. The alloys of this type preferably have an a-axis length of 499 pm or longer and a c-axis length of 405 pm or longer in the crystal lattice of the $CaCu_5$ structure.

The electrode 10 of the first embodiment is also suitable for application to nonaqueous secondary batteries, such as lithium ion secondary batteries. Similarly to the anode of nickel-hydrogen secondary batteries, the anode of nonaqueous secondary batteries uses an active material showing large expansion and contraction with charges and discharges.

A preferred process of producing the electrode of the first embodiment is described with reference to Fig. 2. First of all, a carrier foil 11 is prepared as shown in Fig. 2(a). The carrier foil 11 is not limited in material but is preferably electrically conductive. While the carrier foil 11 which is conductive does not need to be metal, the carrier foil 11 which is metal provides an advantage that a used foil can be melted and recycled into foil. From the standpoint of easy recyclability, the material of the carrier foil 11 is preferably the same as the surface layer 4 formed by electroplating. Serving as a support for making the electrode 10, the carrier foil 11 preferably has such strength not to wrinkle or twist during fabrication of the electrode. From this viewpoint, the carrier foil 11 preferably has a thickness of about 10 to 50 μm. Since the primary role of the carrier foil 11 is to serve as a support, production of the electrode 10 does not always require use of the carrier foil where the surface layer 4 is strong enough.

The carrier foil can be prepared by, for example, electrolysis or rolling. Rolling provides a carrier foil with small surface roughness. Such a carrier foil with small surface roughness has a merit that a release layer 11 a (hereinafter described) is unnecessary. Where the carrier foil 11 is fabricated by electrolysis, on the other hand, operations from production of the carrier foil 11 to production of the electrode 10 can be carried out on the same production line. The in-line production of the carrier foil 11 is advantageous for stable production of the electrode 10 and reduction of production cost. Electrolytic foil 11 is obtained by electrolysis in an electrolytic bath containing metal ions (e.g., copper or nickel ions) using a rotary drum as a cathode to deposit the metal on the drum. The deposited metal is peeled from the drum to obtain the carrier foil 11.

When the carrier foil 11 has small surface roughness, the active material layer 3 can be formed directly on the carrier foil 11. Otherwise, the carrier foil may be provided with a release layer 11a as shown in Fig. 2(a), on which the active material layer 3 is formed. The release layer 11 a not only facilitates peeling but imparts anticorrosion to the carrier foil 11. Irrespective of whether or not the release layer 11a is formed, the carrier foil 11 preferably has a surface roughness Ra of 0.01 to 3 μm, still preferably 0.01 to 1 μm, particularly preferably 0.01 to 0.2 μm. With this small surface roughness, the electrode directly built up on the carrier foil 11 can be peeled off successfully, or, the release layer 11a can be formed thereon with a uniform thickness. Where the release layer 11a is provided, the surface roughness Ra of the carrier foil 11 may in some cases exceed the recited range without causing any problem; for the surface roughness of the carrier foil 11 would be reduced by the release layer 11a.

The release layer 11a is preferably formed by, for example, plating with chromium, nickel or lead or chromating. The reason for this preference is that the release layer 11a thus formed forms an oxide or salt skin layer, which has a function to reduce the adhesion between the carrier foil 11 and an electrodeposited layer (hereinafter described) thereby to improve releasability. Organic compounds are also effective as a release agent. Nitrogen-containing compounds or sulfur-containing compounds are particularly preferred. The nitrogen-containing compounds preferably include triazole compounds, such as benzotriazole (BTA), carboxybenzotriazole (CBTA), tolyltriazole (TTA), N',N'-bis(benzotriazolylmethyl)urea (BTD-U), and 3-amino-1H-1,2,4-triazole (ATA). The sulfur-containing compounds include mercaptobenzothiazole (MBT), thiocyanuric acid (TCA), and 2-benzimidazolethiol (BIT). These organic compounds are dissolved in an alcohol, water, an acidic solvent, an alkaline solvent, etc., and the solution is applied to the carrier foil 11 by any coating technique including dipping. The concentration of the solution of, for example, CBTA is preferably 2 to 5 g/l. For successful peel, the thickness of the release layer 11a is preferably 0.05 to 3 $\mu$m. The release layer 11a formed on the carrier foil 11 preferably has a surface roughness Ra of 0.01 to 3 $\mu$m, still preferably 0.01 to 1 $\mu$m, particularly preferably 0.01 to 0.2 $\mu$m, similarly to the carrier foil 11 on which the active material layer 3 is to be formed directly.

The carrier foil 11 prepared by electrolysis has, in nature of the process, a smooth glossy surface on one side thereof that has faced the rotary drum and a rough, matte surface on the other side, i.e., the metal deposited side. In other words, the two sides of the electrolytic foil 11 are different in surface roughness. The release layer 11a, if necessary, can be formed on either the glossy surface or the matte surface. Forming the release layer 11a on the glossy surface with smaller surface roughness is preferred for releasability. Where the release layer 11a is formed on the matte surface, it is recommended to use an electrolytic foil formed in the presence of an electrolytic bath additive, such as the additive disclosed in JP-A-9-143785, or to etch the matte surface before forming the release layer 11 a, or to roll the matte surface, thereby to reduce the surface roughness.

In the next step, the release layer 11a is coated with a slurry containing active material particles to form the active material layer 3 as depicted in Fig. 2(b). Where there is not the release layer 11a, the active material layer 3 is directly formed on the carrier foil 11. The slurry contains a binder, a diluting solvent, etc. in addition to the active material particles. Useful binders include styrene-butadiene rubber (SBR), polyethylene (PE), and an ethylene-propylene-diene monomer (EPDM). Useful diluting solvents include water and ethanol. The slurry preferably contains about 40% to 90% by weight of the active material particles, about 0.4% to 4% by weight of the binder, and about 5% to 85% by weight of the diluting solvent.

Before forming the active material layer 3 on the release layer 11a, the release layer 11 a may be electroplated to form a very thin layer as a precursor of one of the current-collecting surface layers 4 (hereinafter referred to as the lower surface layer 4 for the sake of ease of description). Although the lower surface layer 4 can successfully be formed later by the hereinafter described step of electroplating, previous formation of the precursor layer on the release layer 11a by electroplating is effective in balancing the thicknesses of the finally formed pair of surface layers 4. Electroplating the release layer 11 a to form the precursor layer can be carried out under the same conditions as in the hereinafter described step of electroplating. Electroplating under these conditions easily results in formation of the aforementioned microvoids in the precursor layer.

The slurry applied to the release layer 11a or the precursor layer on the release layer 11a is dried to form the active material layer 3. The active material layer 3 thus formed has numerous fine interstitial spaces between the active material particles. The carrier foil 11 with the active material layer 3 is then immersed in a plating bath containing a metallic material, a kind of conductive materials, to conduct electroplating (this process will hereinafter be sometimes called penetration plating). On putting the active material layer 3 in the plating bath, the plating solution penetrates into the fine spaces and reaches the interface between the active material layer 3 and the release layer 11a or the precursor layer. In this state, electroplating is conducted to deposit the metal (a) in the inside of the active material layer 3, (b) on the outer surface (the surface in contact with the plating bath) of the active material layer 3, and (c) on the inner surface (the surface in contact with the release layer 11a) of the active material layer 3. There is thus obtained the electrode 10 shown in Fig. 1 having a pair of the surface layers 4 on both sides thereof and the same material as the surface layers 4 penetrating the whole thickness direction of the active material layer 3 (see Fig. 2(c)).

The conditions of the penetration plating are of importance for depositing the metallic material deep in the active material layer 3 and for forming a great number of microvoids 5 in the surface layer 4. When, for example, a copper sulfate-based plating bath is used for copper plating, recommended conditions are 30 to 100 g/l in copper concentration, 50 to 200 g/l in sulfuric acid concentration, 30 ppm or lower in chlorine concentration, 30° to 80°C in bath temperature, and 1 to 100 A/dm$^2$ in current density. In using a copper pyrophosphate-based plating bath, recommended conditions are 2 to 50g/l in copper concentration, 100 to 700g/l in potassium pyrophosphate concentration, 30° to 60°C in bath temperature, 8 to 12 in pH, and 1 to 10A/dm$^2$ in current density. For nickel electroplating, a Watt's bath can be used. Recommended conditions for electroplating using a Watt's bath are 150 to 350 g/l in nickel sulfate concentration, 20 to 70 g/l in nickel chloride concentration, 10 to 50 g/l in boric acid concentration, 30° to 80°C in bath temperature, and 0.5 to 100 A/dm$^2$ in current density. By appropriately adjusting these electrolysis conditions, the material forming the surface layers 4 is allowed to penetrate through the whole thickness direction of the active material layer 3 to form a pair of surface layers 4 electrically connected to each other, and the aforementioned numerous microvoids 5 are easily formed in the surface layers 4. If the current density is too high, metal deposition takes place only on the outer surface of the active material layer 3 but not in the inside.

According to the above-described process, two operations are performed simultaneously: the operation for depositing the metallic material inside the active material layer 3 and the operation for forming the surface layer 4 having microvoids 5 on at least one side of the active material layer 3. In this process, the metallic material deposited inside the active material layer 3 and the material constituting at least one of the surface layers 4 are the same. It is possible to carry out these two operations separately. In this case, the metallic material is deposited inside the active material layer 3 by penetration plating, and the carrier foil 11 having the active material layer 3 is then immersed in another plating bath to carry out electroplating to form the surface layer 4 on the active material layer 3. By carrying out the step of electroplating in two divided substeps, at least one of the surface layers can be made of a material different from the metallic material deposited inside the active material layer 3. When the upper surface layer 4 is formed by electroplating separately from the penetration plating, the conditions of the former can be the same as for the latter, whereby the microvoids are successfully formed in the upper surface layer 4.

The method of forming the microvoids 5 while the surface layer 4 is formed by electroplating involves no application of outer force unlike the hereinafter described method including pressing. Therefore damage to the surface layers 4, which leads to damage of the electrode 10, is averted. The present inventors assume that the microvoids 5 are formed during the formation of the surface layer 4 through the following mechanism. Since the active material layer 3 contains the active material particles 2, it has microscopic unevenness on its surface. That is, some sites are active allowing easy growth of the metallic crystals and other sites are not. The rate of crystal growth is not uniform on such an uneven surface. When the active material layer in this condition is electroplated, the crystal growth is not uniform and the material particles in the surface layer 4 grow to become polycrystal. As the metallic material nuclei grow into crystals, adjacent crystals butt against each other forming small gaps therebetween. Many of the thus formed small gaps connect to each other to form microvoids 5. The microvoids 5 formed by the above-described method have extreme fineness.

The microvoids 5 can also be created by pressing the structure having the active material layer 3 and the thus formed two surface layers 4. To obtain sufficient electron conductivity, the pressing is preferably carried out to such an extent that the total thickness of the active material layer 3 and the surface layers 4 is reduced to 90% or less, still preferably 80% or less. Pressing can be performed with, for example, a roll press machine. It is desirable that the pressed active material layer 3 have 1% to 30% by volume of the vacant spaces 6 as previously stated. The vacant spaces 6 relax the stress attributed to the volume expansion of the active material during charging. Such a proportion of the vacant spaces 6 can be obtained by controlling the pressing conditions as described above. The proportion of the vacant spaces 6 can be determined by electron microscope mapping.

Prior to the penetration plating, the active material layer 3 may be subjected to pressing. The pressing in that stage will be referred to as prepressing for distinction from the pressing after plating. Prepressing is effective in preventing delamination between the previously formed lower surface layer 4 (i.e., the very thin precursor layer) and the active material layer 3 and preventing the active material particles 2 from being exposed on the surface of the electrode 10. It follows that reduction of battery cycle life due to fall-off of the active material particles 2 is prevented. Prepressing also serves to control the degree of penetration of the metallic material into the active material layer 3. When strongly pressed, the active material layer 3 reduces the distance between the particles, which curbs penetration of the metallic material. When lightly pressed, the active material layer 3 retains a long distance between the particles, which facilitates penetration of the metallic material. The prepressing is preferably conducted to such an extent that the thickness of the active material layer 3 is reduced to 95% or less, still preferably 90% or less.

Finally, the electrode 10 is peeled off the carrier foil 11 as shown in Fig. 2(d). Although Fig. 2(d) shows that the release layer 11a remains on the carrier foil 11, whether the release layer 11a actually remains on the side of the carrier foil 11 or the electrode 10 depends on the thickness or the material of the release layer 11a. The release layer 11a can remain on both the carrier foil 11 and the electrode 10. Where the release layer 11a remains makes no difference in electrode performance because of its very small thickness.

According to the process of Fig. 2, the electrode 10 of which the both sides are subject to electrode reaction can be produced by conducting the operation for forming an active material layer only once. In contrast, conventional processes for producing an electrode of which the both sides serve for electrode reaction require forming an active material layer on each side of a thick conductor (i.e., a current collector). In other words, two operations for forming an active material layer have been involved. Therefore the above-described process shown in Fig. 2 achieves extremely improved production efficiency.

The process of Fig. 2 also offers an advantage that the electrode 10, which is thin and wrinkly, can easily be handled and transported as formed on the carrier foil 11 until it is peeled from the carrier foil 11 when assembled into a battery.

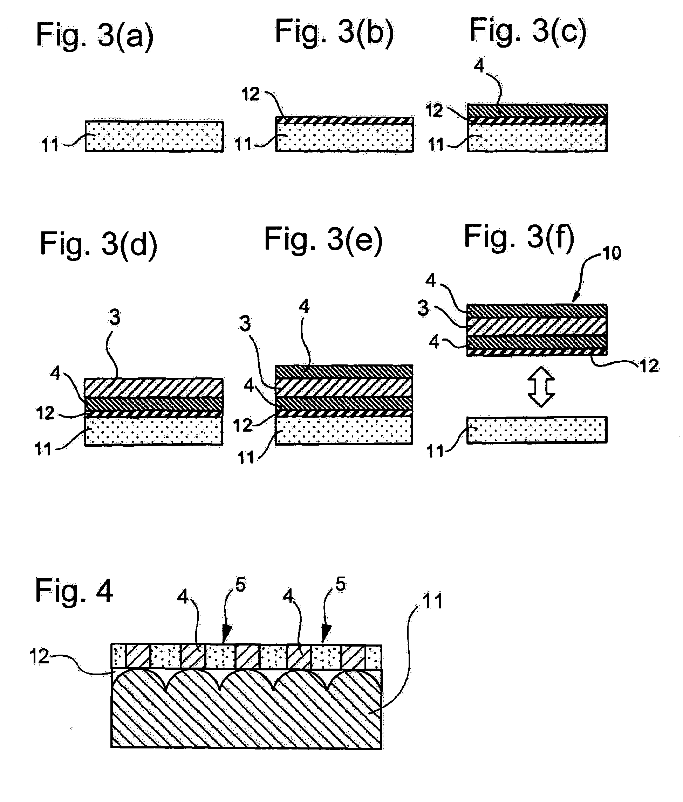

Another preferred process for producing the electrode 10 according to the first embodiment will be described with reference to Fig. 3. The description about the aforementioned process of Fig. 2 appropriately applies to those particulars of the present process shown in Fig. 3 that are not explained here. Similarly to the aforementioned process, the present process includes the steps of first forming the lower surface layer 4, forming the active material layer 3 on the lower surface layer 4, and forming the upper surface layer 4. The process starts with preparation of a carrier foil 11 as shown in Fig. 3(a).

It is preferred that the surface of the carrier foil 11 on which the lower surface layer 4 is to be formed has some roughness. Rolled foil has a smooth surface on both sides thereof in nature of the process, whereas electrolytic foil has a rough surface on one side and a smooth surface on the other side. The rough surface is the metal-deposited side in electrolysis. So, the rough surface of an electrolytic foil can be made use of as the surface on which the lower surface layer 4 is to be formed, which is more convenient than using a carrier foil with its surface rendered rough by any surface treatment. The advantages attributed to the use of a rough surface will be described later. The rough surface preferably has a surface roughness Ra (JIS B0601) of 0.05 to 5 $\mu$m, still preferably 0.2 to 0.8 $\mu$m in order to facilitate forming microvoids of desired diameter and desired distribution.

One surface, preferably the rough surface, of the carrier foil 11 is made releasable by applying a release agent to form a release layer (not shown). Considering that the purpose of applying a release agent is just to facilitate peeling the formed electrode 10 off the carrier foil 11 in the hereinafter described step of peeling (see Fig. 3(f)), the step of applying a release agent may be omitted.

After a release layer is formed, a coating solution containing an electrically conductive polymer is applied and dried to form a polymer film 12. The coating composition applied to the rough surface of the carrier foil 11 is liable to pool in the depressions of the rough surface. Therefore, evaporation of the solvent results in formation of a polymer film 12 with a non-uniform thickness. That is, the polymer film 12 has thicker parts corresponding to the depressions and thinner parts corresponding to the projections of the rough surface of the carrier foil 11. The present process is characterized in that the non-uniformity in thickness of the conductive polymer film 12 is taken advantage of forming a large number of microvoids in the lower surface layer 4.

Conventionally known conductive polymers can be used in the present process with no particular restriction. Examples of useful conductive polymers are polyvinylidene fluoride (PVDF), polyethylene oxide (PEO), polyacrylonitrile (PAN), and polymethyl methacrylate (PMMA). Lithium ion conducting polymers are preferred for application as an anode of nonaqueous secondary batteries, such as lithium ion secondary batteries. The conductive polymers are preferably fluorine-containing ones; for fluorine-containing polymers are stable against heat and chemicals and mechanically strong. From all these considerations, polyvinylidene fluoride, which is a fluorine-containing polymer having lithium ion conductivity, is the most preferred.

The coating solution of the conductive polymer is a solution of the conductive polymer in a volatile organic solvent. For example, N-methylpyrrolidone is suitable for polyvinylidene fluoride.

It is believed that a large number of microvoids are formed in the lower surface layer 4 by the following mechanism. The carrier foil 11 coated with the polymer film 12 is electroplated to form the lower surface layer 4 as shown in Fig. 3(c). Fig. 4 schematically represents an enlargement of Fig. 3(c). The conductive polymer film 12 is electron-conductive anyhow, while not so conductive as metal. The electron conductivity of the polymer film 12 varies with the film thickness. Therefore, metal being deposited on the polymer film 12 shows variations in deposition rate in accordance with the variations in polymer film thickness. The variations in deposition rate result in microvoids 5 in the lower surface layer 4. The site of the lower surface layer 4 that corresponds to the thicker part of the polymer film 12, where the deposition rate is low, tends to become a microvoid 5 as shown in Fig. 4.

The diameter and distribution of the microvoids 5 are controllable by not only the surface roughness Ra of the carrier foil 11 as mentioned above but also the concentration of the conductive polymer in the coating solution. For instance, a lower conductive polymer concentration tends to result in a smaller microvoid diameter and a smaller microvoid distribution. Conversely, a higher conductive polymer concentration tends to result in a larger diameter. From this point of view, a preferred conductive polymer concentration in the coating solution is 0.05% to 5% by weight, particularly 1% to 3% by weight. The coating solution can be applied either by any coating technique including dipping.

The plating bath composition and other plating conditions for forming the lower surface layer 4 are decided appropriately according to the material of the surface layer 4. Plating baths for making the surface layer 4 of copper include a copper sulfate bath having a $CuSO_4 \cdot 5H_2O$ concentration of 150 to 350 g/l and an $H_2SO_4$ concentration of 50 to 250 g/l and a copper pyrophosphate bath. A preferred bath temperature is about 40° to 70°C, and a preferred current density is about 0.5 to 50 A/dm$^2$.

The surface layer 4 having a large number of microvoids 5 is coated with an electrically conductive slurry containing active material particles to form the active material layer 3. The active material layer 3 thus formed has a numerous fine interstitial spaces between the particles. The carrier foil 11 with the active material layer 3 is immersed in a plating bath containing a metallic material, a kind of conductive materials, to conduct electroplating (penetration plating). On putting the active material layer 3 in the plating bath, the plating solution penetrates into the interstitial spaces and reaches the interface between the active material layer 3 and the lower surface layer 4. In this state, electroplating is performed to deposit the metal (a) in the inside of the active material layer 3 and (b) on the inner surface (the surface in contact with the lower surface layer 4) of the active material layer 3. Thus, the metallic material penetrates through the whole thickness direction of the active material layer 3.

The upper surface layer 4 is then formed on the active material layer 3. Containing active material particles, the active material layer 3 has a rough surface. Therefore, the upper surface layer 4 can be formed while creating a large number of microvoids 5 in itself by adopting the same technique as in forming the lower surface layer 4 on the rough side of the electrolytically prepared carrier foil 11. That is, a coating solution containing an electrically conductive polymer is applied to the active material layer 3 followed by drying to form a polymer film (not shown). The polymer film is then electroplated under the same conditions as in the formation of the lower surface layer 4 to form the upper surface layer 4 as shown in Fig. 3(e).

Finally, the carrier foil 11 is peeled off the lower surface layer 4 to give the electrode 10 as shown in Fig. 3(f). Although Fig. 3(f) shows that the polymer film 12 remains on the side of the lower surface layer 4, whether the polymer film 12 actually remains on the side of the carrier foil 11 or the electrode 10 depends on the thickness or the material of the polymer film 12. The polymer film 12 can remain on both the carrier foil 11 and the electrode 10.

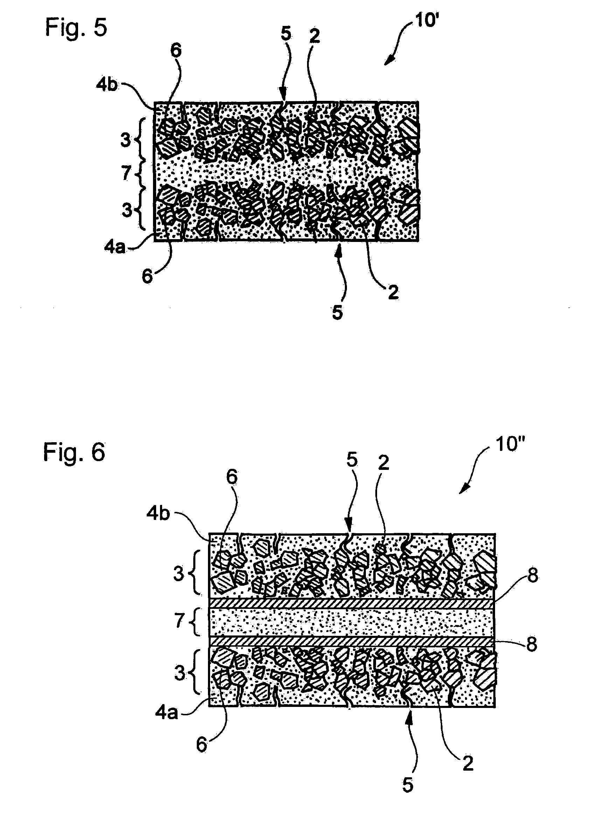

Another embodiment, i.e., a second embodiment of the electrode according to the present invention will be described with reference to Fig. 5. The description about the first embodiment of the electrode appropriately applies to those particulars of the second embodiment that are not explained here. The members in Fig. 5 that are the same as in Fig. 1 are given the same numerical references as in Fig. 1.

As shown in Fig. 5, the electrode 10' of the second embodiment has an electrically conductive foil 7 in the middle of its thickness direction, an active material layer 3 on both sides of the conductive foil 7, and current-collecting surface layers 4a and 4b covering the respective active material layers 3. The conductive foil 7 can be of the same material as the surface layers. To ensure strength, a rolled foil of high strength alloy or a stainless steel foil can be used.

The electrode 10' has an electrically conductive material filled in the entire thickness direction of at least one of the active material layers 3. The active material particles 2 are not exposed on the surface of the electrode 10' but buried in the surface layers 4a and 4b. The conductive material fills in the thickness direction of each of the active material layers 3 and leads to the conductive foil 7. Thus, both the surface layers 4a and 4b electrically connect to the conductive foil 7, whereby the electrode 10' exhibits improved electron conductivity as a whole. The electrode 10' of the second embodiment performs the current collecting function as a whole similarly to the electrode 10 of the first embodiment shown in Fig. 1.

The thicknesses of the surface layers 4a and 4b and the active material layers 3 may be the same as those in the first embodiment. The thickness of the conductive foil 7 is preferably 5 to 40 $\mu$m, still preferably 10 to 20 $\mu$m, for securing an improved energy density while minimizing the total thickness of the electrode. From the same viewpoint, the total thickness of the electrode 10' is preferably 5 to 600 $\mu$m, still preferably 10 to 450 $\mu$m, particularly preferably 10 to 250 $\mu$m.

The electrode 10' of the second embodiment can be produced as follows. A slurry containing the active material particles 2 is applied to each side of the conductive foil 7 and dried to form a pair of the active material layers 3. The conductive foil 7 may be prepared separately or in the same line for producing the electrode 10'. In the latter case, the conductive foil 7 is preferably prepared by electrodeposition. The conductive foil 7 having the active material layer 3b on both sides thereof is immersed in a plating bath containing a metallic material and electroplated with the metallic material to form the surface layers 4a and 4b. By this process, a large number of microvoids can easily be formed in the surface layers 4a and 4b. The metallic material constituting the surface layers 4a and 4b also penetrates the whole thickness direction of the active material layers to electrically connect the surface layers 4a and 4b to the conductive foil 7.

In another process, a metallic material is deposited inside the active material layers 3 by penetration plating in a plating bath containing the metallic material, and the conductive foil 7 having the active material layers 3 is then immersed in another plating bath containing another electrically conductive material to carry out electroplating to form the surface layers 4a and 4b having a large number of microvoids 5 on the outer surface of the active material layers 3.

Fig. 6 represents an anode 10" as a modification of the electrode 10' (hereinafter referred to as a third embodiment of the electrode according to the present invention). The description about the second embodiment shown in Fig. 5 appropriately applies to those particulars of the third embodiment that are not explained here. The anode 10" is especially suited for use in nonaqueous secondary batteries such as lithium ion secondary batteries. The anode 10" has an electrically conductive foil 7 in the middle of its thickness direction, a metallic lithium layer 8 on both sides of the conductive foil 7, an active material layer 3 on each of the lithium layers 8, and current-collecting surface layers 4a and 4b covering the respective active material layers 3. The active material layers 3 contain an element having high capability of forming a lithium compound. The anode 10" shown in Fig. 6 structurally differs from the electrode 10' shown in Fig. 5 in that it has the metallic lithium layer 8 on each side of the conductive foil 7.

According to the third embodiment, even though lithium is consumed with charges and discharges, lithium is dissolved and supplied from the lithium layers 8. This eliminates what we call the lithium depletion problem that is of concern where a battery is designed to have a reduced volume of the cathode active material as compared with the volume of the anode active material. As a result, the initial irreversible capacity can be reduced, and the charge/discharge efficiency in every charge/discharge cycle, i.e., cycle characteristics can be improved. Moreover, because the active material has intercalated lithium before the start of charge/discharge cycles, the volume increase due to lithium intercalation during charging can be reduced, which makes great contribution to the improvement of cycle life.

After lithium dissolves, there are left spaces in the metallic lithium layers 8. The spaces relax the stress due to expansion and contraction of the active material with charges and discharges thereby to prevent the active material from cracking and crumbling. Even if cracking and crumbling of the active material proceeds with repetition of charges and discharges, the active material, not being exposed on the electrode surface but buried inside, is protected from falling off and continues performing the current collecting function. Besides, since the metallic lithium layers are not exposed on the anode surface but buried in the anode so that the problem of dendritic growth of lithium does not occur.

For obtaining satisfactory capability of restoring the capacity, the amount of each of the metallic lithium layers 8 is preferably 0.1 % to 100%, still preferably 0.1 % to 70%, particularly preferably 5% to 50%, of the saturated reversible capacity of the active material contained in the adjacent active material layer 3.

While the anode 10" depicted in Fig. 6 has the metallic lithium layer 8 between the conductive foil 7 and each of the active material layers 3, it suffices that the metallic lithium layer 8 is provided between the conductive foil 7 and at least one of the active material layers 3.

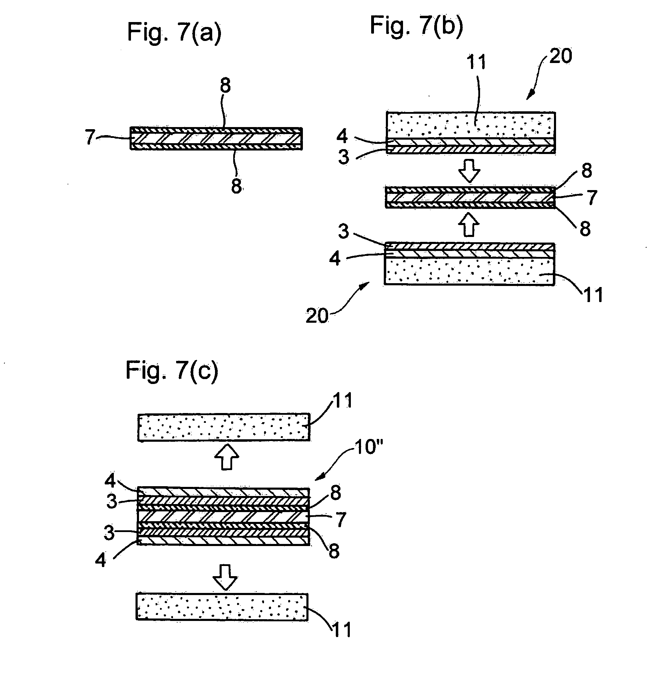

The anode 10" of the third embodiment is preferably produced as follows. A pair of anode precursors 20 shown in Fig. 7(b) are each prepared by forming a conductive polymer film 12 on a carrier foil 11, forming a surface layer 4 on the polymer film 12, and forming an active material layer 3 on the surface layer 4 by applying an electrically conductive slurry containing active material particles to the surface layer 4, followed by penetration plating in accordance with the procedures shown in Figs. 3(a) through 3(d).

Apart from the anode precursors 20, a conductive foil 7 having a metallic lithium layer 8 formed on each side thereof is prepared as shown in Fig. 7(a). The metallic lithium layers 8 can be formed by, for example, press bonding a lithium foil on both sides of the conductive foil 7. The metallic lithium layers 8 may also be formed by various thin film formation techniques, such as chemical vapor deposition and sputtering.

The conductive foil 7 having the metallic lithium layer 8 on each side thereof is sandwiched between the pair of the anode precursors 20 with the active material layers 3 facing inward as shown in Fig. 7(b). Finally, the carrier foils 11 are peeled from the respective surface layers 4 to give the anode 10" as shown in Fig. 7(c). The conductive polymer films 12 are omitted in Figs. 7(b) and 7(c) for the sake of simplicity.

The present invention is not deemed to be limited to the foregoing embodiments. For instance, while in the first embodiment shown in Fig. 1, the conductive material fills in the entire thickness direction of the active material layer to electrically connect the upper and the lower surface layers, the two surface layers do not always need to have electrical connection as long as each surface layer sufficiently secures its current collecting properties. In order to increase the active sites for the electrode reaction between the active material particles and the electrolytic solution, a hole that is open on at least one surface layer and reaches the surface portion of the active material layer at the shallowest or a through-hole piercing the whole thickness direction of the electrode may be formed by laser machining or with a punch, a needle, etc.

Each of the surface layers 4 may have a multilayer structure consisting of two or more sublayers made of different materials instead of the single layer structure as in the foregoing embodiments. For example, the surface layer 4 may have a double layer structure composed of a nickel lower layer and a copper upper layer. Such a double layer structure is more effective in suppressing deformation of the electrode ascribed to the volume change of the active material. Where the surface layer has a multilayer structure, at least one of the materials making up the two or more sublayers may be different from the conductive material filled in the active material layer 3. All the materials making up the respective sublayers may be different from the conductive material.

Where the material of the surface layer 4 is different from the conductive material filled in the active material layer 3, the conductive material may be present up to the boarder between the active material layer 3 and the surface layer 4, or the conductive material may exceed that boarder and constitute part of the surface layer 4. Conversely, the material constituting the surface layer 4 may exceed that boarder and be present in the active material layer 3.

It is possible to carry out depositing the conductive material in the active material layer 3 in two or more divided steps of penetration plating using as many different conductive materials. In this case, the active material layer 3 has two or more conductive materials deposited therein in as many layers.

The present invention will now be illustrated in greater detail by way of Examples, but it should be noted that the invention is not construed as being limited thereto. Unless otherwise specified, all the percents are given by weight.

EXAMPLE 1

(1) Preparation of active material particles

Raw materials of a hydrogen storage alloy were weighed out and mixed to give an alloy composition of $MmNi_{4.45}Mn_{0.45}Al_{0.30}Co_{0.10}$. The mixture was put into a crucible, and the crucible was set in a high frequency induction furnace, and the furnace was evacuated to $1.33 \times 10^{-2}$ Torr or lower. After the mixture was melted in an argon atmosphere, it was poured into a water-cooled copper mold and cast at 1430°C to obtain an alloy. The alloy was heat treated at 1060°C for 3 hours in an argon atmosphere to give a hydrogen storage alloy as an ingot. The ingot was ground and sieved into three fractions: <20 $\mu$m, 20-53 $\mu$, and >53 $\mu$m.

2) Preparation of active material slurry

A slurry having the following composition was prepared using the 20-53 $\mu$m fraction of the hydrogen storage alloy.

| | |
|---|---|
| Active material particles | 50% |
| Acetylene black (particle size: 0.1 $\mu$m) | 8% |
| Binder (styrene-butadiene rubber) | 2% |
| Diluent (ethanol) | 40% |

3) Formation of release layer

A 35 $\mu$m thick electrolytic copper foil having a surface roughness Ra of 0.1 $\mu$m was used as a carrier foil. The copper foil was subjected to chromate treatment to form a release layer as shown in Fig. 2(a). The release layer had a thickness of 0.5 $\mu$m.

4) Formation of active material layer

The active material slurry was applied to the release layer and dried to form a coating layer, which was densified by pressing using a roll press machine at a linear pressure of 0.5 t/cm to form an active material layer having a thickness of 30 $\mu$m.

5) Formation of current-collecting surface layers

The copper foil with the active material layer on was immersed in a plating bath having the following formulation and electroplated at a current density of 5 A/dm$^2$ for 1180 seconds to make an anode shown in Fig. 2(c). Plating bath formulation:

| | |
|---|---|
| Nickel sulfate | 250 g/l |
| Nickel chloride | 45 g/l |
| Boric acid | 30g/l |
| Bath temperature: | 50°C |

The resulting anode had a pair of current-collecting surface layers as shown in Fig. 2(c). The thickness of the surface layer in contact with the copper foil was 1 $\mu$m, and that of the surface layer that was not in contact with the copper foil was 14 $\mu$m.

6) Peeling of carrier foil

The carrier foil was separated from the anode at the release layer. The anode having the structure shown in Fig. 1 was thus obtained.

EXAMPLE 2

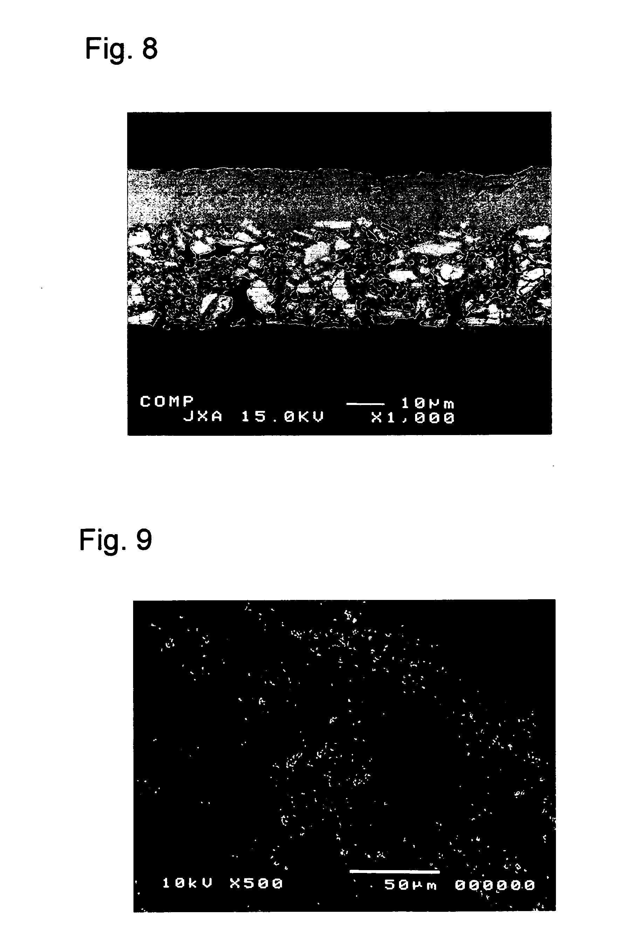

An anode having the structure shown in Fig. 1 was produced in the same manner as in Example 1, except for

using the <20 μm fraction in place of the 20-53 μm fraction of the hydrogen storage alloy. An electron micrograph taken of a cut area of the resulting anode is shown in Fig. 8. An electron micrograph taken of the current-collecting surface layer of the anode that had faced the copper foil is shown in Fig. 9. While the micrograph of Fig. 8 does not clearly show the current-collecting surface layer that had faced the copper foil, Fig. 9 verifies the formation of the current-collecting surface layer with microvoids on the side that had faced the copper carrier foil. It was also confirmed that the active material layer was covered with the surface layer of that side and the active material particles were not exposed on the surface.

EXAMPLE 3

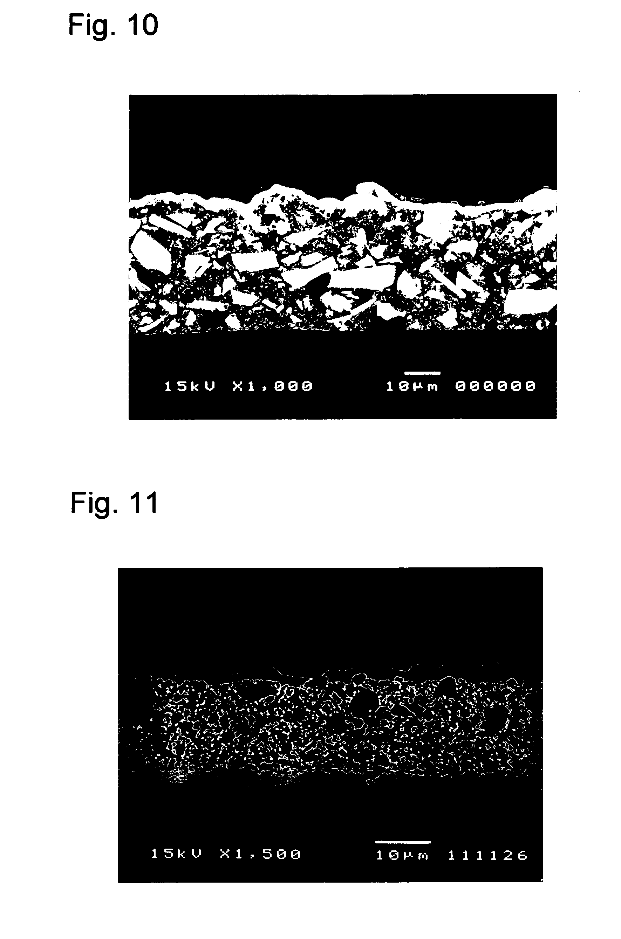

An anode having the structure shown in Fig. 1 was produced in the same manner as in Example 2, except for changing the plating time from 1180 seconds to 413 seconds. An electron micrograph taken of a cut area of the resulting anode is shown in Fig. 10. While not shown in the drawings, electron microscopic observation of the surface that had faced the copper carrier foil revealed the formation of the current-collecting surface layer with microvoids on that side. It was also confirmed that the active material layer was covered with that surface layer and the active material particles were not exposed on the surface.

COMPARATIVE EXAMPLE 1

The same slurry as used in Example 1 was applied to one side of a 100 μm thick stainless steel perforated metal sheet and dried. The coating layer was densified by roll pressing under a linear pressure of 0.5 t/cm to obtain an anode having a 150 μm thick active material layer on one side thereof.

Performance evaluation:

Aqueous secondary batteries were produced as follows by using each of the anodes prepared in Examples 1 to 3 and Comparative Example 1. The resulting batteries were evaluated by measuring the capacity density per volume at the cycle at which a maximum discharge capacity was reached (hereinafter referred to as a maximum capacity density per volume), the capacity retention at the 200th cycle, and the output characteristics in accordance with the methods described below. The results of measurements are shown in Table 1.

Assembly of aqueous secondary battery:

Sintered nickel hydroxide as a counter electrode and the anode obtained above as a working electrode were placed to face each other with a separator between them and assembled into an aqueous secondary battery in a usual manner by using a KOH aqueous solution having a specific gravity of 1.30 as an aqueous electrolytic solution.

1) Maximum capacity density per volume:

The discharge capacity per anode volume ($Ah/cm^3$) at the cycle at which a maximum discharge capacity was reached was obtained. While discharge capacity per volume is generally expressed per volume of the active material or the active material layer, the discharge capacity per volume of the anode was adopted here so as to clarify the advantage of not using a thick current collector.

2) Capacity retention at the 200th cycle:

Capacity retention (200th cycle) (%) = discharge capacity at 200th cycle/maximum discharge capacity x 100

3) Output characteristics

The capacity at the 21 st cycle was measured. Then, the electrode was charged at 0.2C for 6 hours, followed by discharging at 0.2C for 2.5 hours, followed by allowing to stand for 30 minutes, followed by discharging at 2C. The voltage at 10 second discharging (2C) was taken as an indication of output characteristics. The results obtained were expressed relatively taking the 10 second discharging voltage of the battery using the anode of Comparative Example 1 as a standard (100). The higher the voltage, the better the output characteristics. "2C" in discharging means discharging at such a current that all the capacity is drained in 30 minutes.

TABLE 1

|  | Maximum Capacity Density per Volume (mAh/cm$^3$) | Capacity Retention at 200th Cycle (%) | Output Characteristics |
|---|---|---|---|
| Example 1 | 1120 | 95 | 110 |
| Example 2 | 1150 | 95 | 150 |
| Example 3 | 1380 | 90 | 130 |
| Comp. Example 1 | 1010 | 80 | 100 |

As is apparent from the results in Table 1, the secondary batteries having the anodes of Examples 1 to 3 are superior to the battery having the anode of Comparative Example 1 in all of maximum capacity density per volume, capacity retention at the 200th cycle, and output.

EXAMPLE 4

An electrode was prepared in accordance with the process shown in Fig. 3. A 35 μm thick electrolytic copper foil was subjected to acid cleaning at room temperature for 30 seconds, followed by washing with pure water at room temperature for 30 seconds to prepare a carrier foil. The carrier foil was immersed in a 3.5 g/l CBTA solution kept at 40°C for 30 seconds for release treatment. The carrier foil taken out of the solution was washed with pure water for 15 seconds.

A 2.5% solution of polyvinylidene fluoride in N-methylpyrrolidone was applied to the rough side of the carrier foil (Ra=0.5 μm). The solvent vaporized to form a polymer film. The carrier foil coated with the polymer film was electroplated in an $H_2SO_4/CuSO_4$-based plating bath containing 250 g/l of $CuSO_4$ and 70 g/l of $H_2SO_4$ at a current density of 5 A/dm$^2$ to form a lower surface layer of copper on the polymer film to a deposit thickness of 5 μm. The carrier foil having the lower surface layer formed thereon was washed with pure water for 30 seconds and dried in the atmosphere.

A slurry containing active material particles was applied to the lower surface layer to a thickness of 18 μm to form an active material layer. The active material particles were silicon particles having a median diameter $D_{50}$ of 2 μm. The slurry contained the active material, acetylene black, and styrene-butadiene rubber at a ratio of 93:2:5.

The carrier foil having the active material layer formed thereon was electroplated with nickel in a Watt's bath containing 250 g/l of $NiSO_4 \cdot 6H_2O$, 45 g/l of $NiCl_2 \cdot 6H_2O$, and 30 g/l of $H_3BO_3$ at a bath temperature of 50°C, a bath pH of 5, and a current density of 5 A/dm$^2$. This electroplating was penetration plating involving penetration of the plating bath into the active material layer. A nickel anode and a direct current power source were used for electrolysis. The penetration plating was stopped when part of the active material particles were still exposed on the plated surface. The carrier foil with the plated active material layer was washed with pure water for 30 seconds and dried in the atmosphere.

A 2.5% solution of polyvinylidene fluoride in N-methylpyrrolidone was applied to the active material layer. The solvent vaporized to form a polymer film. The carrier foil coated with the polymer film was electroplated in an Cu plating bath containing 200 g/l of $H_3PO_4$ and 200 g/l of $Cu_3(PO_4)_2 \cdot 3H_2O$ at a bath temperature of 40°C at a current density of 5 A/dm$^2$ to form an upper surface layer of copper on the polymer film to a deposit thickness of 2 to 3 μm. The carrier foil having the upper surface layer formed thereon was washed with pure water for 30 seconds and dried in the atmosphere.

Finally, the carrier foil was stripped off the lower surface layer to give an anode for nonaqueous secondary batteries having the active material layer sandwiched in between a pair of surface layers. An electron micrograph of a cut area of the resulting anode is shown in Fig. 11. As a result of electron microscopic observation of the surface layers, it was found that the upper and the lower surface layers had 50 and 30 fine pores, respectively, in average per 1 cm square.

EXAMPLE 5

An anode was produced in the same manner as in Example 4, except that the lower and the upper surface layers were formed as follows.

Formation of lower surface layer:

The carrier foil having the polymer film was electroplated with copper to form a 8 $\mu$m thick first sublayer having fine pores under the same copper plating conditions as in Example 4. The carrier foil was further electroplated with nickel using a Watt's bath to form a 2 $\mu$m thick second sublayer having fine pores thereby to form a double layered lower surface layer. The Watt's bath had the same composition as used in Example 4. The nickel plating was carried out at a bath temperature of 50°C and a bath pH of 5 at a current density of 5 A/dm$^2$.

After the polymer film was formed on the active material layer, the carrier foil was electroplated with nickel to form a 2 $\mu$m thick second sublayer having fine pores and then with copper for form an 8 $\mu$m thick first sublayer having fine pores thereby to form a double layered upper surface layer. The plating bath composition and the plating conditions used for forming the first and the second sublayers were the same as those used in the formation of the double layered lower surface layer.

COMPARATIVE EXAMPLE 2

The same slurry as used in Example 4 was applied to each side of a 35 $\mu$m thick electrolytic copper foil to form an active material layer having a thickness of 15 $\mu$m per side. The copper foil having the active material layers was electroplated with copper using the same plating bath under the same conditions as in Example 4 to form a 0.05 $\mu$m thick copper layer on each active material layer. As a result of observation under a scanning electron microscope, the copper layer was found not to be continuously covering the active material layer but to be distributed in islands, and there were no holes that could be regarded as fine pores in the copper layer.

Performance evaluation:

Nonaqueous secondary batteries were produced as follows by using each of the anodes prepared in Examples 4 and 5 and Comparative Example 2. The resulting batteries were evaluated by measuring the maximum discharge capacity, and the capacity retention at the 50th cycle in accordance with the following methods. The results of measurements are shown in Table 2.

Assembly of nonaqueous secondary battery:

The anode obtained as a working electrode and LiCoO$_2$ as a counter electrode were placed to face each other with a separator between them and assembled into a nonaqueous secondary battery in a usual manner by using an LiPF$_6$ solution in a mixture of ethylene carbonate and dimethyl carbonate (1:1 by volume) as a nonaqueous electrolytic solution.

1) Maximum discharge capacity

The discharge capacity per weight of the active material (mAh/g) at the cycle at which a maximum discharge capacity was reached was measured. The discharge capacity per volume of the anode (mAh/cm$^3$) at the cycle at which a maximum discharge capacity was reached was also measured.

2) Capacity retention at the 50th cycle

$$\text{Capacity retention (50th cycle) (\%)} = \text{discharge capacity at 50th cycle/maximum discharge capacity} \times 100$$

TABLE 2

| | Maximum Discharge Capacity per Weight (mAh/g) | Maximum Discharge Capacity per Volume (mAh/cm$^3$) | Capacity Retention at 50th Cycle (%) |
|---|---|---|---|
| Example 4 | 3000 | 2750 | 90 |
| Example 5 | 2900 | 1840 | 90 |
| Comp. Example 2 | 1800 | 700 | 5 |

As is apparent from the results in Table 2, the batteries having the anodes of Examples 4 and 5 are superior to the battery having the anode of Comparative Example 2 in both maximum discharge capacity and capacity retention at the 50th cycle.

Industrial Applicability:

In the electrode of the present invention, the active material is not exposed on the electrode surface but buried inside. As a result, generation of electrically isolated active material particles is effectively prevented, which assures sufficient current collecting capabilities and brings about an increased output. The active material is prevented from falling off with a repetition of charges and discharges, and the current collecting properties of the active material is secured. Deterioration with a repetition of charges and discharges can be suppressed to bring about an extended charge/ discharge cycle life, and the charge/discharge efficiency is improved. The active material, being buried, is protected against oxidation or corrosion, which permits use of active material particles with a reduced size. The active material with a smaller particle size has a larger specific surface area, which contributes to improvement in output. When the electrode of the invention has a pair of surface layers for current collection, the electrode exhibits increased strength. Unlike collector type electrodes, the electrode of the invention has no current collector so that it has an increased relative proportion of the active material. Thus, the secondary battery using the electrode of the invention has increased energy density per unit volume and unit weight compared with those using the collector type electrodes. To use no current collector also brings about improved electrode flexibility compared with foam type electrodes.

## Claims

1.   An electrode for secondary batteries which comprises a first and a second surface both showing electrical conductivity and adapted to be brought into contact with an electrolytic solution and an active material layer containing active material particles positioned between said surface and has no thick conductor for current collection.

2.   The electrode according to claim 1, which has a large number of microvoids which are open on at least one of the first surface and the second surface, lead to the active material layer, and allow the electrolytic solution to pass.

3.   The electrode according to claim 2, which has a pair of surface layers for current collection inclusive of the first surface and the second surface, respectively, the microvoids being formed in at least one of the surface layers and extending in the thickness direction of the at least one of the surface layers, and the active material layer being positioned between said surface layers.

4.   The electrode according to claim 3, which has an electrically conductive material filled in the active material layer over the entire thickness direction thereof to electrically connect the surface layers and exhibits a current collecting function as a whole.

5.   The electrode according to claim 3, wherein the surface layers each have a thickness of 0.3 to 20 $\mu$m.

6.   The electrode according to claim 1, wherein the active material particles are particles of a hydrogen storage alloy.

7.   The electrode according to claim 1, wherein the active material layer is formed by applying an electrically conductive slurry containing the active material particles.

8.   The electrode according to claim 3, wherein the surface layers are formed by electroplating.

9. The electrode according to claim 1, which has a total thickness of 1 to 500 $\mu$m.

10. The electrode according to claim 1, which is an anode for a nonaqueous secondary battery and which comprises a pair of surface layers for current collection each having a surface that is adapted to be brought into contact with a nonaqueous electrolytic solution and at least one active material layer which is disposed between the surface layers and contains particles of an active material having high capability of forming a lithium compound, at least one of the surface layers having a large number of microvoids extending in the thickness direction thereof and allowing the nonaqueous electrolytic solution to pass, and a material which has low capability of forming a lithium compound being filled between the particle formed in the at least one active material layer and being different from at least one of the material constituting one of the surface layers.

11. The electrode according to claim 10, wherein at least one of the surface layers has a multilayer structure composed of at least two sublayers different in material, and at least one of the materials constituting sublayers is different from said material having low capability of forming a lithium compound and filled in the at least one active material layer.

12. A process of producing an electrode for secondary batteries comprising the steps of:

   preparing a carrier foil having a release layer on a side thereof,
   applying an electrically conductive slurry containing active material particles to a release layer formed on a carrier foil to form an active material layer,
   plating the active material layer formed on the carrier foil with a metal by electrodeposition in a plating bath containing the metal to form an electrode containing the active material layer, and
   peeling the electrode off the carrier foil at the release layer.

13. An electrode for secondary batteries which comprised a first and a second surface both showing electrical conductivity and adapted to be brought into contact with an electrolytic solution an active material layer containing active material particles positioned between said first surface and said second surface, and an electrically conductive foil in the middle of the thickness direction thereof, wherein the active material layer is present on both sides of the conductive foil.

14. The electrode according to claim 13, which has a total thickness of 1 to 600 $\mu$m.

15. The electrode according to claim 13, wherein
   the active material layer formed on each side of the conductive foil contains an element having high capability of forming a lithium compound, and
   a metallic lithium layer is provided between the conductive foil and the active material layer on at least one side of the conductive foil.

16. A secondary battery having the electrode according to claim 1 as a cathode or an anode.

17. A secondary battery having the electrode according to claim 13 as a cathode or an anode.

Fig. 1

Fig. 2(a)

Fig. 2(b)

Fig. 2(c)

Fig. 2(d)

Fig. 3(a)

Fig. 3(b)

Fig. 3(c)

Fig. 3(d)

Fig. 3(e)

Fig. 3(f)

Fig. 4

Fig. 5

Fig. 6

Fig. 7(a)

Fig. 7(b)

Fig. 7(c)

Fig. 8

```
COMP                    10µm
    JXA 15.0KV     X1,000
```

Fig. 9

```
10kV X500        50µm 000000
```

## Fig. 10

## Fig. 11

## INTERNATIONAL SEARCH REPORT

| International application No. |
|---|
| PCT/JP2004/017352 |

A. CLASSIFICATION OF SUBJECT MATTER
Int.Cl⁷ H01M4/02, H01M4/24, H01M4/04, H01M4/64

According to International Patent Classification (IPC) or to both national classification and IPC

B. FIELDS SEARCHED

Minimum documentation searched (classification system followed by classification symbols)
Int.Cl⁷ H01M4/02, H01M4/24, H01M4/04, H01M4/64

Documentation searched other than minimum documentation to the extent that such documents are included in the fields searched
Jitsuyo Shinan Koho        1922–1996   Jitsuyo Shinan Toroku Koho   1996–2004
Kokai Jitsuyo Shinan Koho   1971–2004   Toroku Jitsuyo Shinan Koho   1994–2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 8-50922 A   (Canon Inc.),<br>20 February, 1996 (20.02.96),<br>Claims; Par. Nos. [0038], [0041], [0050] to<br>[0059], [0131]; Fig. 3<br>& EP 690517 A1        & US 6051340 A1 | 1-5,7-9,16<br>6,10-15,17 |
| A | JP 2002-289178 A  (Sanyo Electric Co., Ltd.),<br>04 October, 2002 (04.10.02),<br>Full text<br>& US 2002-168572 A1 | 1-17 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 December, 2004 (15.12.04) | 11 January, 2005 (11.01.05) |

| Name and mailing address of the ISA/<br>Japanese Patent Office | Authorized officer |
|---|---|
| Facsimile No. | Telephone No. |

Form PCT/ISA/210 (second sheet) (January 2004)